# EUROPEAN PATENT APPLICATION

(11) **EP 4 497 629 A1**
(43) Date of publication of application: **29.01.2025**
(21) Application number: 22933005.5
(22) Date of filing: 20.09.2022
(51) Int. Cl.: B60N 2/42, B60N 2/433, B60N 2/427

(54) **SEATBACK FOLLOW-UP SYSTEM FOR VEHICLE SEAT**

(30) Priority: 21.03.2022 CN 202210276170
(71) Applicant: Yanfeng International Automotive Technology Co., Ltd., Shanghai 201306 (CN)
(72) Inventor: LIU, Chongqing, Shanghai 201306 (CN); ZHAO, Wei, Shanghai 201306 (CN); HUANG, Laiguo, Shanghai 201306 (CN); WANG, Longmei, Shanghai 201306 (CN)
(74) Representative: Specht, Peter
(86) International application number: PCT/CN2022/119842
(87) International publication number: WO 2023/178953

(57) **Abstract**

A seatback servo system for a vehicle seat, comprising: a first plate (200) provided on a cushion frame (2), the first plate (300) being provided with guide members (610 and 620) extending outward; a second plate (300) provided on a back frame (3), the second plate (200) being pivotally connected to the first plate (300) at a pivot, and being provided with an arc-shaped guide groove (340) with the pivot as the center and with a radius of L, and the arc-shaped guide groove (340) comprising a starting end (320) and a terminating end (330) that are opposite to each other; and an unlocking mechanism (500), the unlocking mechanism (500) being configured to unlock the first plate (200) and the second plate (300) from a non-pivotable locked state to a pivotable state, and comprising a housing (542) mounted on the first plate (200), and an unlocking lever (530) movable with respect to the housing (542). When an unlocking condition is satisfied, the unlocking lever (530) is withdrawn from the terminating end (330) of the arc-shaped guide groove (340), such that a seatback is automatically rotated forward. The seatback servo system greatly improves the safety of the vehicle seat.

## Description

### TECHNICAL FIELD

The present invention relates to the field of vehicle collision safety, and in particular relates to a seatback servo system for a vehicle seat.

### BACKGROUND ART

At present, for seat belts in the field of vehicles, three-point seat belts are adopted for most of the vehicles except for special-purpose vehicles, wherein at least two anchor points or fixed points are fixed on a vehicle body structure, another point is a buckle which can be fixed on a seat, and of course, there is also a design in which three points of a seat belt for a vehicle are all fixed on the vehicle body. The fixed points on the vehicle body, as anchor points of the seat belt, need to have enough strength and cannot become loose, so as to provide a restraining force for an occupant during a collision, but excessive restraining force may cause injury to the chest of the occupant, so that there is a force-limited three-point seat belt. During traveling of the vehicle, if the seatback is brought down, and the occupant takes a semi-recumbent position or lies down completely for a rest, then in case that a frontal collision of the vehicle occurs at this time, the traditional seat belt and air bag fixed on the vehicle body structure cannot provide effective protection for the occupant.

With the development of intelligentization of vehicles, autonomous driving or unmanned driving technology, the driver in the vehicle will be partially or completely freed from attention to the driving process, and the driver in the vehicle, especially the occupant on the front passenger seat, will have more possible sitting postures. Three sitting postures can be included: 1) a normal driving and riding sitting posture, 2) a working sitting posture, and 3) a leisure sitting posture. Specifically, the normal driving and riding sitting posture means that the occupant fully focuses on the traveling state of the vehicle, and the seatback is generally adjusted to the design position of the seat, for example, about 25°; the working sitting posture means that the occupant will not focus on the traveling state of the vehicle and can work or have some entertainment in the vehicle, and the seatback is adjusted to about 45°; for the leisure sitting posture, the occupant does not pay attention to the traveling of the vehicle at all, the occupant may have a rest with eyes closed, and the seatback is adjusted to 60° or even a larger angle.

After the angle of the back of a prior art vehicle seat, especially the back of a front-row seat, is adjusted, the seatback locks the angle of the back by a seat recliner and is fixed, and the seatback cannot rotate when a collision occurs. Statistical analysis of injury to occupants in traffic accidents shows that after unavoidable frontal or side collision occurs, the safety restraining system of the prior art or traditional vehicles, including seat belts fixed on the seats, can hardly effectively protect the occupants in a working sitting posture or a leisure sitting posture, and it may even can cause more serious injury, because the existing technical solutions for collision safety provide protection against collision safety injuries only for occupants in a driving or riding position or according to the design position of the seat.

### SUMMARY OF THE INVENTION

One of the objects of the present disclosure is to provide a seatback servo system for a vehicle seat, which can overcome at least one of the defects in the prior art.

One aspect of the present disclosure relates to a seatback servo system for a vehicle seat comprising a cushion frame and a back frame which is pivotable forward and backward with respect to the cushion frame, wherein the seatback servo system comprises:
a first plate provided on the cushion frame, the first plate being provided with a guide member extending outward;
a second plate provided on the back frame, the second plate being pivotally connected to the first plate at a pivot, and being provided with an arc-shaped guide groove with the pivot as the center and with a radius of L, and the arc-shaped guide groove comprising a starting end and a terminating end that are opposite to each other; and
an unlocking mechanism configured to unlock the first plate and the second plate from a non-pivotable locked state to a pivotable state, and comprising a housing mounted to the first plate, and an unlocking lever movable with respect to the housing;
wherein in a state of normal use of the vehicle, the guide member and the unlocking lever are respectively located at the starting end and the terminating end of the arc-shaped guide groove, so that the first plate and the second plate are in the non-pivotable locked state;
wherein when an unlocking condition is satisfied, the unlocking lever is withdrawn from the terminating end of the arc-shaped guide groove, so that the first plate and the second plate transition from the non-pivotable locked state to the pivotable state, and the arc-shaped guide groove can travel along the guide member from the starting end toward the terminating end, such that the seatback is automatically rotated forward.

In some embodiments, the arc-shaped guide groove has a free segment, and the free segment has a dimension greater than or equal to a corresponding dimension of the guide member.

In some embodiments, the free segment is provided with a bush made of a material with a low friction coefficient to reduce or control the frictional resistance upon the passage of the guide member through the free segment.

In some embodiments, the arc-shaped guide groove also has an energy absorbing segment, and the energy absorbing segment has a dimension smaller than a corresponding dimension of the guide member, wherein the free segment is disposed adjacent to the starting end and the energy absorbing segment is disposed adjacent to the terminating end.

In some embodiments, in a direction in which the second plate pivots relative to the first plate, the second plate is provided with a fractured energy absorbing structure upstream of the arc-shaped guide groove.

In some embodiments, the fractured energy absorbing structure comprises a plurality of weakened slots spaced apart from the arc-shaped guide groove.

In some embodiments, the first plate is provided with a first pivot hole at the pivot, the second plate is provided with a second pivot hole at the pivot, and a pivot fastener passes through the first pivot hole and the second pivot hole to connect the second plate pivotally to the first plate.

In some embodiments, the first plate is further provided with a receiving hole to receive the guide member and a fixing hole to fix the unlocking mechanism, the receiving hole and the fixing hole correspond in position to the starting end and the terminating end of the arc-shaped guide groove and are spaced apart from the first pivot hole by a distance L.

In some embodiments, the first pivot hole is disposed in front of and above the receiving hole and the fixing hole, and the second pivot hole is disposed in front of and above the arc-shaped guide grove.

In some embodiments, an electronic control unit is configured to detect a collision acceleration and an angle of the seatback of the vehicle, and issue an unlocking instruction to the unlocking mechanism in a case where the collision acceleration and the angle of the seatback satisfy the set threshold values to withdraw the unlocking lever from the terminating end of the arc-shaped guide groove.

In some embodiments, the first plate comprises a cushion wall plate located on the left or right side of the cushion frame.

In some embodiments, the second plate comprises a recliner lower connecting plate of a recliner located on the left or right side of a lower end of the back frame.

In some embodiments, the recliner comprises a first portion and a second portion that are rotatable relative to each other, the first portion is fixed to a main body of the back frame and the second portion is fixed to the recliner lower connecting plate which in turn is operatively connected to the first plate by the seatback servo system.

In some embodiments, the unlocking mechanism is a gunpowder-triggered unlocking mechanism or an electromagnetically triggered unlocking mechanism.

In some embodiments, the unlocking mechanism further comprises a piston and a driving assembly, the piston is fixed in an internal chamber of the housing by a temporary fixing means, and the driving assembly pushes the piston to rapidly displace in the internal chamber after overcoming the resistance of the temporary fixing means.

In some embodiments, the temporary fixing means is selected from the group consisting of an interference fit, bonding, and a fragile connector.

In some embodiments, the internal chamber communicates with the outside through an opening, and the unlocking lever is connected with the piston through the opening from the outside of the housing or integrally formed with the piston, so that the piston can drive the unlocking lever to move with respect to the housing.

In some embodiments, the unlocking lever is provided in a substantially T shape, a bottom end of the T shape is connected to the piston and a top end of the T shape is inserted into the arc-shaped guide groove of the recliner lower connecting plate and located at the terminating end of the arc-shaped guide groove.

In some embodiments, the driving assembly comprises an ignition tube, and the ignition tube ignites the gunpowder after electric current passes and generates a high-pressure gas, to push the piston to rapidly displace in the internal chamber.

In some embodiments, the piston is provided with one or more O-rings, the opening of the internal chamber is provided with a sealing block, and the ignition tube is fixed to the housing and is in fluid communication with an enclosed space enclosed by the piston, the O-rings, the housing, the sealing block and the unlocking lever.

In some embodiments, the annular area of the piston is greater than that of the sealing block, so that the high-pressure gas generated by the ignition tube can push the piston to rapidly displace in one direction.

In some embodiments, a short circuit ring is provided at a pin of the ignition tube to prevent false triggering of the ignition tube.

Another aspect of the present disclosure relates to a vehicle seat comprising the above-described seatback servo system which is mounted on a cushion frame and/or a back frame.

Other features and advantages of the subject technology of the present disclosure will be set forth in the following description, and will be partly apparent from the description, or may be learned by practicing the subject technology of the present disclosure. The advantages of the subject technology of the present disclosure will be achieved and obtained by the structure particularly indicated in the written description and claims thereof as well as the accompanying drawings.

It is to be understood that the foregoing general description and the following detailed description are both exemplary and illustrative, and they are intended to provide further explanation of the subject technology of the present disclosure as claimed.

### BRIEF DESCRIPTION OF THE DRAWINGS

Many aspects of the present disclosure will be better understood after a reading of the following detailed description of the embodiments in combination with the accompanying drawings, wherein:
Figs. 1A and 1B respectively show side views of different states of a vehicle seat with a seatback servo system mounted thereto;
Fig. 2A shows an exploded perspective view of the seatback servo system, and Figs. 2B and 2C show perspective views of the assembling of the seatback servo system from different angles;
Figs. 3A and 3B respectively show perspective views of a cushion frame and a back frame of a vehicle seat with a seatback servo system mounted thereto;
Figs. 4A and 4B respectively show front views of two exemplary recliner lower connecting plates;
Figs. 5A and 5B respectively show cross-sectional views of different states of use of an exemplary unlocking mechanism;
Figs. 6A and 6B respectively show a side view and an enlarged side view of a vehicle seat with a seatback servo system mounted thereto, when it is in a large-inclination position;
Figs. 7A and 7B respectively show a side view and an enlarged side view of a vehicle seat with a seatback servo system mounted thereto, in the process of pivoting from the large-inclination position to a small-inclination position;
Figs. 8A and 8B respectively show a side view and an enlarged side view of a vehicle seat with a seatback servo system mounted thereto, when it reaches the small-inclination position.

### DETAILED DESCRIPTION OF THE EMBODIMENTS

The present disclosure will be described below with reference to the accompanying drawings which show several embodiments of the present disclosure. It should be understood, however, that the present disclosure may be presented in many different ways and is not limited to the embodiments described below; in fact, the embodiments described below are intended to make the disclosure of the present disclosure more complete and to fully convey the protection scope of the present disclosure to those skilled in the art. It should also be understood that, the embodiments disclosed herein can be combined in various ways to provide more additional embodiments.

It should be understood that, the same reference signs represent the same elements in all the drawings. In the drawings, the size of some features may be changed for clarity.

It should be understood that, the terminology used in the description is for the purpose of describing particular embodiments only and is not intended to limit the present disclosure. Unless otherwise defined, all terms (including technical and scientific terms) used in the description have the meaning as commonly understood by those skilled in the art. Well-known functions or structures may not be described in detail for brevity and/or clarity.

The singular forms "a", "an" and "the" used in the description all include the plural forms, unless clearly indicated otherwise. The terms "comprise" , "include" and "contain" used in the description specify the presence of stated features, but do not preclude the presence of one or more other features. The term "and/or" used in the description includes any and all combinations of one or more of the associated listed items. The terms "between X and Y" and "between about X and Y" used in the description should be interpreted to include X and Y. The term "between about X and Y" used in the description means "between about X and about Y", and the term "from about X to Y" used in the description means "from about X to about Y".

In the description, when an element is referred to as being "on", "attached" to, "connected" to, "coupled" to, "contacting", etc., another element, this element can be directly on, attached to, connected to, coupled to or contacting the other element, or an intervening element may be present. In contrast, when an element is referred to as being "directly on", "directly attached" to, "directly connected" to, "directly coupled" to or "directly contacting" another element, there would be no intervening elements. In the description, when a feature is disposed "adjacent to" another feature, it may mean that a feature has a portion that overlaps an adjacent feature or a portion above or below an adjacent feature.

In the description, spatially relative terms, such as "above", "below", "left", "right", "front", "rear", "high", "low" and the like, may illustrate the relationship of one feature to another feature in the figures. It should be understood that the spatially relative terms encompass different orientations of a device in use or operation in addition to the orientation depicted in the figures. For example, if the device in the figures is inverted, features originally described as being "below" other features would then be described as being "above" the other features. The device may be otherwise oriented (rotated 90 degrees or at other orientations), and at this time the relative spatial relationship will be interpreted accordingly.

In this description, the front-rear longitudinal direction, the left-right transverse direction and the up-down vertical direction are defined in terms of an occupant on a vehicle seat. The vehicle seat 1 comprises a cushion frame 2 and a back frame 3 which may pivot forward and backward with respect to the cushion frame 2. When the back frame 3 is in a rearward large-inclination position with respect to the cushion frame 2, the occupant is in a working sitting posture or a leisure sitting posture, and the rearward inclination angle between a trunk line of the human body and a vertical line is large, for example, greater than 40°~45°. At this time, if a frontal collision of the vehicle occurs, the risk of injury to the occupant will be much higher than the risk in the case where the back frame 3 is in a small-inclination position.

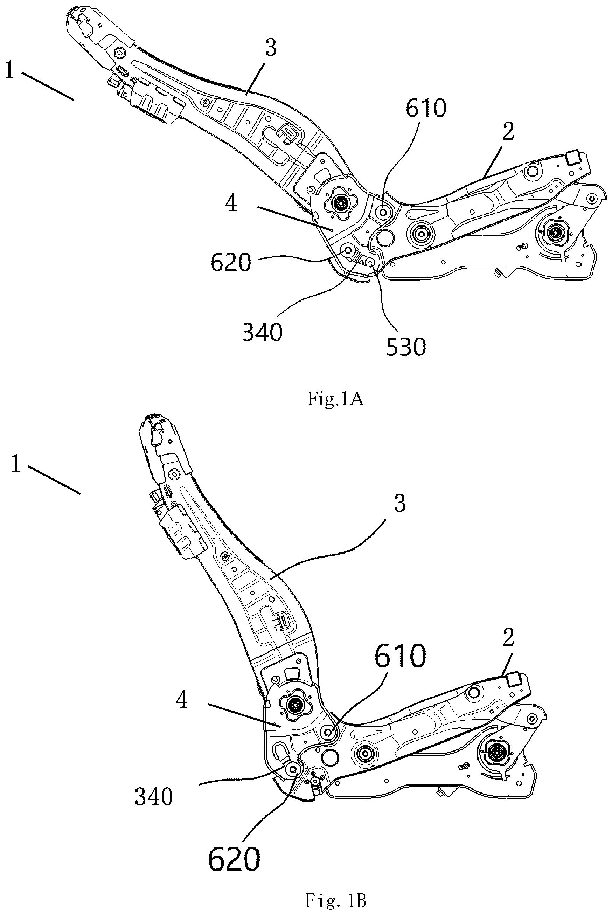

A seatback servo system 4 according to embodiments of the present disclosure is used to prevent the occupant from completing the full collision process when the back frame 3 is in a large-inclination position with respect to the cushion frame 2. Figs. 1A and 1B respectively show side views of different states of the seatback servo system 4. As shown in the figures, the seatback servo system 4 is mounted on the back frame 3 and/or the cushion frame 2 of the seat. If an unlocking condition is satisfied, an unlocking mechanism of the seatback servo system 4 performs unlocking. For example, during a frontal collision of the vehicle, the seatback servo system 4 may automatically pivot the back frame 3 rapidly forward from the large-inclination position shown in Fig. 1A to the small-inclination position shown in Fig. 1B under the combined action of the inertia force of the seatback and the restraining force of the fixed points on the seat belt that restrains the occupant (here, the fixed points on the seat belt are fixed on the seatback). During forward pivoting, the seatback servo system 4 may also absorb part of the occupant's kinetic energy. Thus, the seatback servo system 4 can reduce the injury to the occupant from various aspects, such as a better collision position and/or absorbing the occupant's kinetic energy.

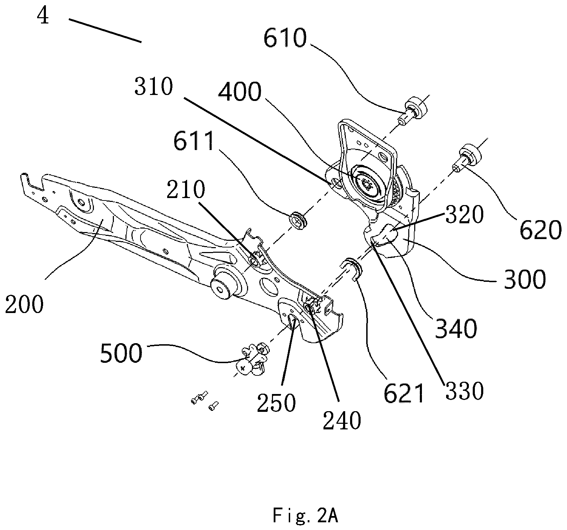

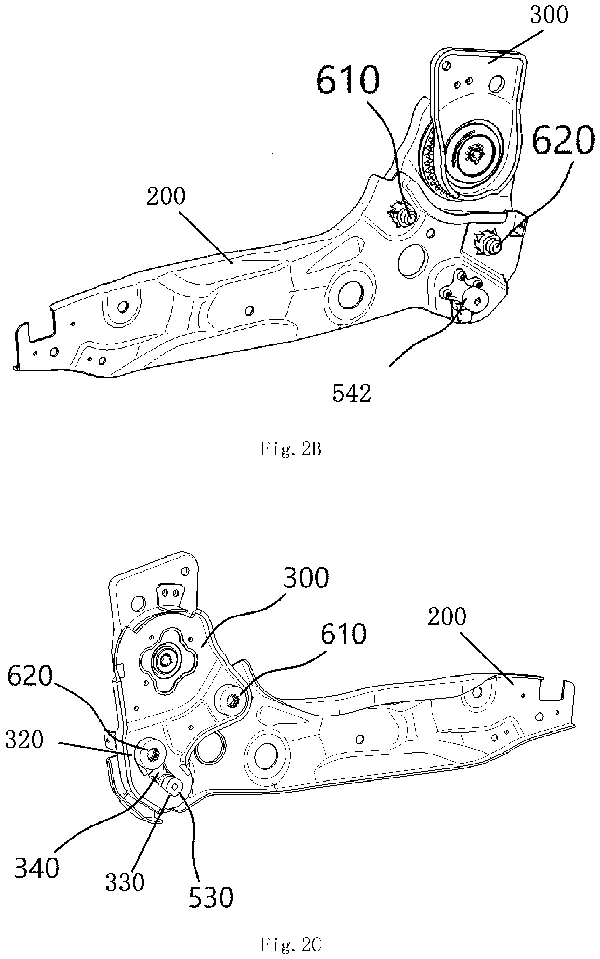

Fig. 2A shows an exploded perspective view of the seatback servo system 4, and Figs. 2B and 2C show perspective views of the assembling of the seatback servo system 4 from different angles. As shown in the figures, the seatback servo system 4 comprises a first plate 200 provided on the cushion frame 2 and a second plate 300 provided on the back frame 3, and the second plate 300 is pivotally connected to the first plate 200 at a pivot. The seatback servo system 4 further comprises an unlocking mechanism 500, and the unlocking mechanism 500 may unlock the first plate 200 and the second plate 300 from a non-pivotable locked state to a pivotable state.

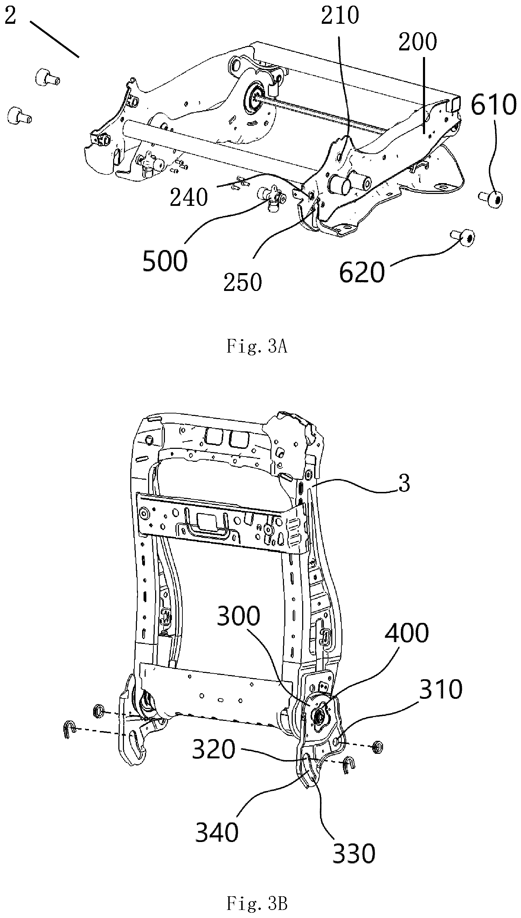

As shown in Fig. 3A, the first plate 200 may be a cushion wall plate 200 located on the left or right side of the cushion frame 2. As shown in Fig. 3B, the second plate 300 may be a recliner lower connecting plate 300 of a recliner 400 located on the left or right side of a lower end of the back frame 3. The recliner 400 comprises a first portion and a second portion that are rotatable relative to each other. A main body of the back frame 3 is fixed to the first portion, and the second portion is fixed to the recliner lower connecting plate 300. The recliner lower connecting plate 300 is in turn operatively connected to the cushion wall plate 200 and the entire cushion frame 2 by the seatback servo system 4. In a non-collision situation, the occupant may adjust the inclination of the back frame 3 with respect to the recliner lower connecting plate 300, the cushion wall plate 200 and the entire cushion frame 2 by the recliner 400. The back frame 3 is relatively fixed with respect to the recliner lower connecting plate 300 in a state where the recliner 400 does not perform adjustment. In the case of collision, if an unlocking condition is satisfied, during the process of a frontal collision of the vehicle, the seatback servo system 4 can automatically pivot the back frame 3 and the recliner lower connecting plate 300 rapidly forward with respect to the cushion wall plate 200 and the entire cushion frame 2 to a small-inclination position under the combined action of the inertia force of the seatback and the restraining force on the seat belt that restrains the occupant. The structure of the first plate 200 and the second plate 300 will be explained below with the cushion wall plate 200 and the recliner lower connecting plate 300 as examples, but it should be understood that the first plate 200 may be any other plate belonging to the cushion frame 2 or connected to the cushion frame 2, and the second plate 300 may be any other plate belonging to the back frame 3 or connected to the back frame 3.

Returning to Figs. 2A-2C, the cushion wall plate 200 is provided with a pivot hole 210. Correspondingly, the recliner lower connecting plate 300 is provided with a pivot hole 310. A fastener 610, such as a bolt, may pass through the pivot hole 210 of the cushion wall plate 200 and the pivot hole 310 of the recliner lower connecting plate 300 to connect the recliner lower connecting plate 300 pivotally to the cushion wall plate 200. Thus, the recliner lower connecting plate 300 may pivot about the fastener 610 relative to the cushion wall plate 200. In some embodiments, a circular bush 611 may be provided in the pivot hole 310.

The cushion wall plate 200 is further provided with a receiving hole 240 and a fixing hole 250 (which may be in a closed circular shape, an open U shape, or any suitable shape) which are spaced apart from the pivot hole 210 by a distance L and spaced apart from each other, to respectively receive guide members 610, 620 (to be described in detail below) and fix the unlocking mechanism 500. Correspondingly, the recliner lower connecting plate 300 is provided with an arc-shaped guide groove 340, and a central axis of the arc-shaped guide groove 340 is designed in the shape of a circular arc with the pivot hole 310 as the center and with a radius L. Along a direction in which the recliner lower connecting plate 300 pivots forward relative to the cushion wall plate 200, the arc-shaped guide groove 340 is provided with a starting end 320 and a terminating end 330 that are opposite to each other. The positions of the starting end 320 and the terminating end 330 on the recliner lower connecting plate 300 correspond to the positions of the receiving hole 240 and the fixing hole 250 on the cushion wall plate 200, respectively.

In the illustrated embodiment, the pivot hole 210 is disposed in front of and above the receiving hole 240 and the fixing hole 250, and the pivot hole 310 is disposed in front of and above the arc-shaped guide grove 340. However, it will be understood that the pivot hole 210 and the pivot hole 310 may also be disposed in any other orientation of the receiving hole 240 and the fixing hole 250 and the arc-shaped guide groove 340, respectively.

The guide member 620, such as a bolt, may pass through the receiving hole 240 of the cushion wall plate 200 and enter the arc-shaped guide groove 340 of the recliner lower connecting plate 300, and be located at the starting end 320 of the arc-shaped guide groove 340. After the unlocking mechanism 500 unlocks the recliner lower connecting plate 300 and the cushion wall plate 200 from the locked state to the pivotable state, the arc-shaped guide groove 340 may travel from the starting end 320 along the guide member 620 to guide the recliner lower connecting plate 300 to pivot forward relative to the cushion wall plate 200 about the fastener 610.

The unlocking mechanism 500 comprises a housing 542 mounted to the cushion wall plate 200, and an unlocking lever 530 movable relative to the housing 542. In a state when leaving the factory, the unlocking lever 530 extends outward from the housing 542, enters the arc-shaped guide groove 340 of the recliner lower connecting plate 300 through the fixing hole 250 of the cushion wall plate 200, and is located at the terminating end 330 of the arc-shaped guide groove 340.

In a case of normal use or when the unlocking condition is not satisfied, the guide member 620 and the unlocking lever 530 of the unlocking mechanism 500 are inserted at two opposite ends (i.e., starting end 320 and terminating end 330) of the arc-shaped guide groove 340, respectively, so that the recliner lower connecting plate 300 is locked with respect to the cushion wall plate 200 and cannot pivot about the fastener 610. When a frontal collision of the vehicle occurs and the unlocking condition is satisfied, the unlocking lever 530 is withdrawn from the terminating end 330 of the arc-shaped guide groove 340. At this time, the recliner lower connecting plate 300 can pivot about the fastener 610 relative to the cushion wall plate 200, thereby releasing the locked state of the recliner lower connecting plate 300 with respect to the cushion wall plate 200. Thus, the arc-shaped guide groove 340 can travel from the starting end 320 toward the terminating end 330 along the guide member 620, to guide the recliner lower connecting plate 300 to pivot forward relative to the cushion wall plate 200 about the fastener 610. The way to trigger the unlocking of the unlocking mechanism 500 may be gunpowder-triggered, electromagnetically triggered, etc.

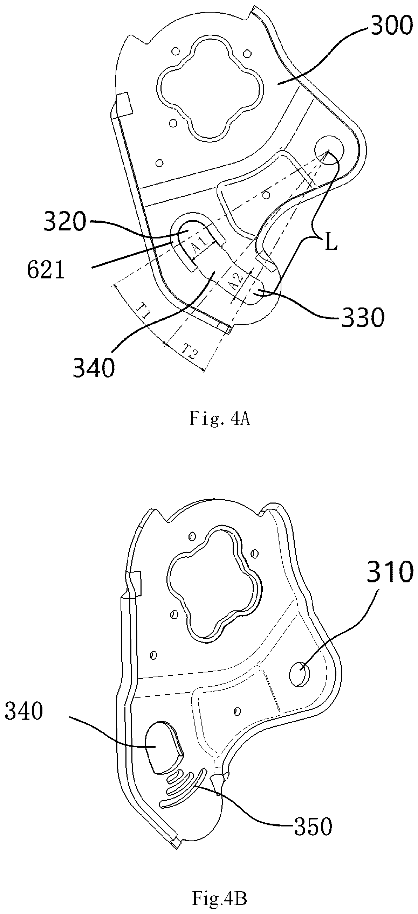

Fig. 4A shows a front view of the recliner lower connecting plate 300. As shown in the figure, the arc-shaped guide groove 340, along a direction of the central axis thereof, has an arc-shaped free segment T1 and an arc-shaped energy absorbing segment T2. The free segment T1 is adjacent to the starting end 320 and a dimension A1 (e.g., groove width) is greater than or equal to the corresponding dimension (e.g., diameter) of the guide member 620, so that the guide member 620 can travel freely within the free segment T1 to make the back frame 3 rapidly follow to a position that is safer for the human body. After the pivoting within the free segment T1 is completed, a rearward inclination angle between a trunk line of the human body and a vertical line is generally less than 45°. The energy absorbing segment T2 is adjacent to the terminating end 330 and has a dimension A2 (e.g., groove width) that is less than a corresponding dimension (e.g., diameter) of the guide member 620, so that the guide member 620 and the hole wall material of the energy absorbing segment T2 press each other and deform to absorb part of the kinetic energy of the seatback itself and the occupant to further reduce the injury to the human body. After the pivoting within the energy absorbing segment T2 is completed, a rearward inclination angle between the trunk line of the human body and the vertical line is further reduced, which facilitates restraining of the occupant. It is to be understood that the angles and dimensions of the arc-shaped segments T1 and T2 may vary depending on the vehicle collision characteristics. In addition, it is to be understood that the arc-shaped guide groove 340 may also be provided with two or more free segments T1, and/or two or more energy absorbing segments T2, and each energy absorbing segment T2 defines a respective resistance property according to the amount of interference with respect to the guide member 620.

When the back frame 3 pivots forward from the large-inclination position to the small-inclination position with respect to the cushion frame 2, the arc-shaped guide groove 340, starting from the starting end 320, freely passes through the entire free segment T1 along the guide member 620; after reaching the energy absorbing segment T2, the arc-shaped guide groove 340 will absorb part of the kinetic energy of the seatback itself and the occupant, and along the guide member 620, it passes through part of the energy absorbing segment T2, or passes through the entire energy absorbing segment T2 and reaches the terminating end 330.

In some embodiments, a bush 621 may be provided at the free segment T1 of the arc-shaped guide groove 340. The bush 621 may be provided in a substantially U shape to match the outer contour shape of the free segment T1. The bush 621 may be made of a material with a low friction coefficient to reduce the frictional resistance or adjust the magnitude of the frictional resistance upon the passage of the guide member 620 through the free segment T1.

Fig. 4B shows a front view of another embodiment of the recliner lower connecting plate 300. As shown in the figure, the arc-shaped guide groove 340 may have only a free segment T1 and no energy absorbing segment T2. Along a direction in which the recliner lower connecting plate 300 pivots forward relative to the cushion wall plate 200, the recliner lower connecting plate 300 is provided with a fractured energy absorbing structure 350 upstream of the arc-shaped guide groove 340. The fractured energy absorbing structure 350 may be, for example, a plurality of weakened slots spaced apart from the arc-shaped guide groove 340. When the back frame 3 pivots from a large-inclination position to a small-inclination position with respect to the cushion frame 2, the guide member 620 travels from the starting end 320 of the arc-shaped guide groove 340 through the entire free segment T1 to the terminating end 330, after which it passes through the fractured energy absorbing structure 350 and absorbs part of the kinetic energy of the seatback itself and the occupant.

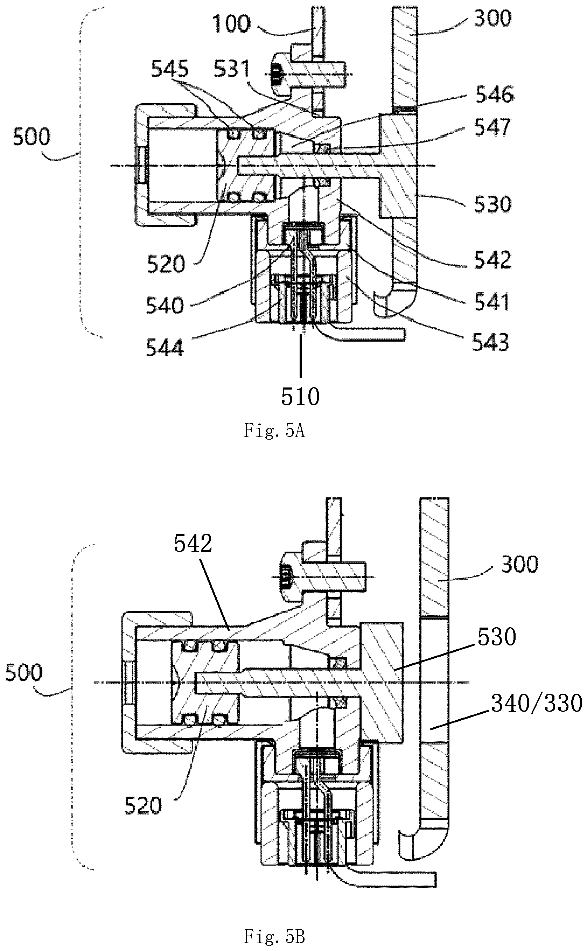

As described above, the unlocking mechanism 500 may be a gunpowder-triggered unlocking mechanism, an electromagnetically triggered unlocking mechanism, or other mechanisms. Fig. 5A shows a cross-sectional view of one example of a gunpowder-triggered unlocking mechanism 500. As shown in the figure, the unlocking mechanism 500 comprises a housing 542, and a piston 520 provided in an internal chamber of the housing 542. The housing 542 is mounted to the cushion wall plate 200 by fasteners such as screws. The piston 520 may be fixed in the internal chamber by a temporary fixing means such as an interference fit, bonding, a fragile connector, etc., and can be rapidly displaced in the internal chamber after the resistance of the temporary fixing means is overcome by means of igniting gunpowder or the like. The internal chamber communicates with the outside through an opening, and the unlocking lever 530 may be connected with the piston 520 through the opening from the outside of the housing 542 or integrally formed with the piston 520, so that the piston 520 can drive the unlocking lever 530 to move with respect to the housing 542. The unlocking lever 530 may be provided in a substantially T shape, a bottom end of the T shape is connected to the piston 520 and a top end of the T shape is inserted into the arc-shaped guide groove 340 of the recliner lower connecting plate 300 and located at the terminating end 330 of the arc-shaped guide groove 340. In some embodiments, one or more O-rings 545 may be provided on the piston 520, and a sealing block 547 may be provided at the opening of the internal chamber, to seal a space 546 enclosed by the piston 520, the O-rings 545, the housing 542, the unlocking lever 530 and the sealing block 547.

The unlocking mechanism 500 further comprises a driving assembly 510 for overcoming the resistance of the temporary fixing means to drive the movement of the piston 520 and the unlocking lever 530. The driving assembly 510 may comprise an ignition tube 540, and the ignition tube 540 ignites the gunpowder after electric current passes and generates a high-pressure gas, to push the piston 520 to rapidly displace in the internal chamber. The ignition tube 540 may be fixed to the underside of the housing 542 by a nut 541 and in fluid communication with the space 546. A short circuit ring 544 may be provided at a pin of the ignition tube 540 to prevent false triggering of the ignition tube 540. The short circuit ring 544 may be fixed to the interior of an outer cover 543 by means of an interference fit or the like, and the outer cover 543 is fixed to the nut 541 by means of snap fit or the like.

When the unlocking condition is satisfied (e.g., in the event of a frontal collision of the vehicle), the ignition tube 540 ignites the gunpowder according to a set ignition strategy, thereby rapidly generating a high-pressure gas in the enclosed space 546 formed by the ignition tube 540, the piston 520, the housing 542, the unlocking lever 530 and the sealing block 547. As the annular area of the piston 520 is greater than that of the sealing block 547, the high-pressure gas pushes the piston 520 to move rapidly in a transversely inward direction, thereby driving the unlocking lever 530 to disengage from the arc-shaped guide groove 340 of the recliner lower connecting plate 300, as shown in Fig. 5B.

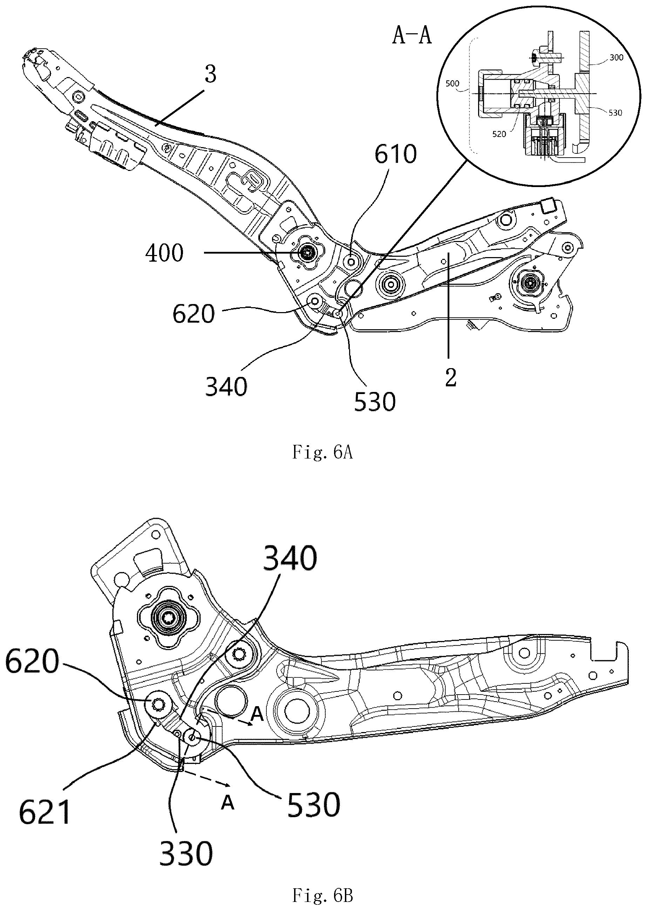

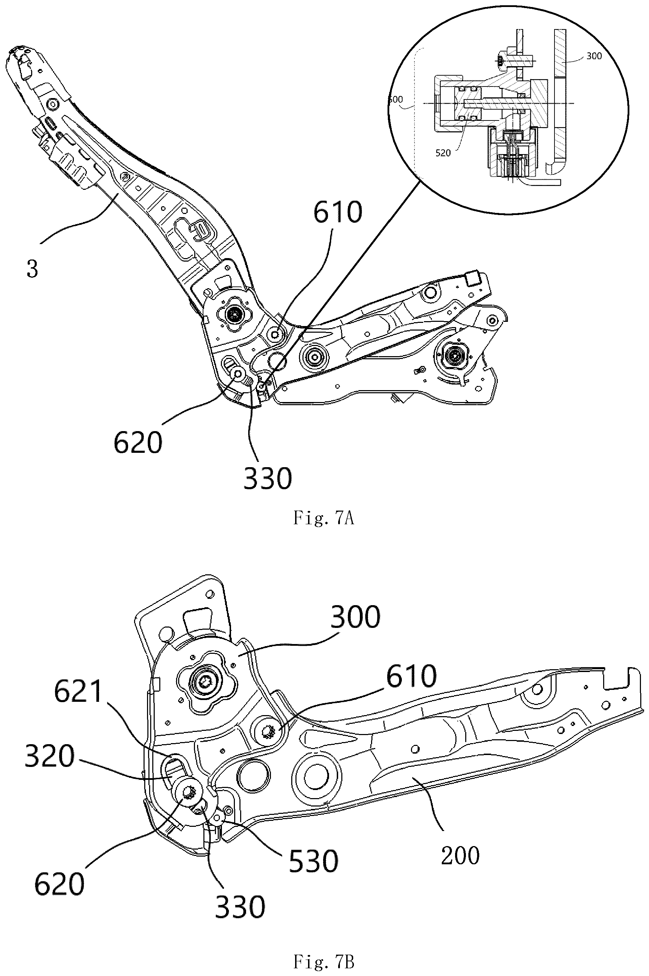

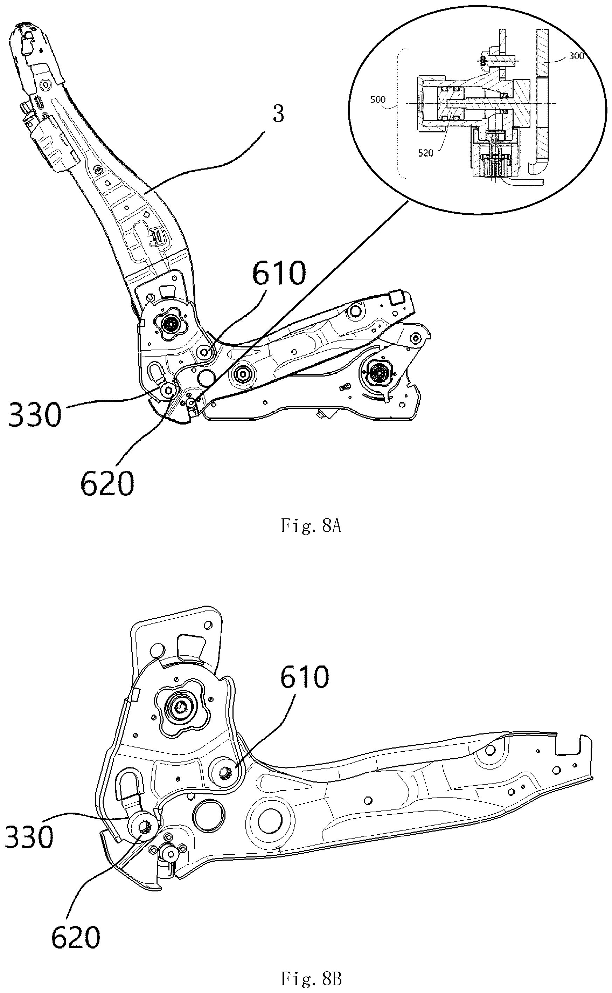

The operation process of the seatback servo system 4 will be described below with reference to Figs. 6A-8B, wherein Figs. 6A and 6B respectively show a side view and an enlarged side view of the vehicle seat 1 when it is in a large-inclination position; Figs. 7A and 7B respectively show a side view and an enlarged side view of the vehicle seat 1 in the process of pivoting from the large-inclination position to a small-inclination position; Figs. 8A and 8B respectively show a side view and an enlarged side view of the vehicle seat 1 when it reaches the small-inclination position. As shown in Figs. 6A and 6B, during normal use of the vehicle (e.g., when no collision occurs), the unlocking mechanism 500 sets the recliner lower connecting plate 300 and the cushion wall plate 200 to the locked state, i.e., the guide member 620 is located at the starting end 320 of the arc-shaped guide groove 340 of the recliner lower connecting plate 300, and the unlocking lever 530 of the unlocking mechanism 500 extends outward to the terminating end 330 of the arc-shaped guide groove 340. At this time, the occupant may use the recliner 400 to adjust the back frame 3 to the large-inclination position with respect to the cushion frame 2.

When a vehicle is subjected to a frontal collision, an electronic control unit (ECU) of the vehicle detects a collision acceleration and an angle of the seatback. In the case where the collision acceleration and the angle of the seatback satisfy the set threshold values, the electronic control unit (ECU) issues an unlocking instruction to the unlocking mechanism 500, that is, the unlocking condition is satisfied. Thereby, the ignition tube 540 of the unlocking mechanism 500 ignites the gunpowder, and generates a high-pressure gas rapidly in the enclosed space 546 formed by the ignition tube 540, the piston 520, the housing 542, the unlocking lever 530 and the sealing block 547. The high-pressure gas pushes the piston 520 to move rapidly in a transversely inward direction, driving the unlocking lever 530 to disengage from the arc-shaped guide groove 340 of the recliner lower connecting plate 300, thereby releasing the locked state of the recliner lower connecting plate 300 relative to the cushion wall plate 200.

After the unlocking of the unlocking mechanism 500, the back frame 3 automatically rotates forward along the collision direction with respect to the cushion frame 2 under the action of the inertia of the seat itself and the tension of the seat belt that restrains the occupant. Thus, the arc-shaped guide groove 340 of the recliner lower connecting plate 300 may travel along the guide member 620 to guide the recliner lower connecting plate 300 to pivot about the fastener 610 with respect to the cushion wall plate 200. Specifically, as shown in Figs. 7A and 7B, starting from the starting end 320, the arc-shaped guide groove 340 passes freely through the entire free segment T1 along the guide member 620, to make the back frame 3 rapidly follow to a position more effective for restraining the occupant. At this time, the rearward inclination angle between a trunk line of the human body and a vertical line is generally less than 45°. Thereafter, as shown in Figs. 8A and 8B, after reaching the energy absorbing segment T2, the arc-shaped guide groove 340 absorbs the energy of the vehicle collision, and along the guide 620, it passes through the entire energy absorbing segment T2 and reaches the terminating end 330, and the back frame 3 will no longer rotate; alternatively, after reaching the energy absorbing segment T2, the arc-shaped guide groove 340 absorbs the kinetic energy of the seatback itself and the occupant and passes through part of the energy absorbing segment T2 along the guide member 620, and the back frame 3 will no longer rotate when the forward rotation moment generated by the inertia force of the occupant and the tension of the seat belt fixed to the seat has become smaller than the rotation resistance moment.

Therefore, the seatback servo system according to embodiments of the present disclosure can enable the vehicle seat to automatically rotate rapidly from a large-inclination position to a relatively upright position along the collision direction, and absorb energy in the servo process, thereby greatly improving the safety of the vehicle seat.

The seatback servo system according to embodiments of the present disclosure detects the position of the seatback by the electronic control unit (ECU) to determine whether to activate the unlocking mechanism. The structure is simple with a small number of components, and the cost is low.

The seatback servo system according to embodiments of the present disclosure locks the seatback by a thick and solid unlocking lever of the unlocking mechanism, which can ensure the static strength of the seatback.

The seatback servo system according to embodiments of the present disclosure unlocks the unlocking mechanism by controlling the generation of a high-pressure gas through the ECU, and the stability is good.

Although exemplary embodiments of the present disclosure have been described, those skilled in the art should understand that various changes and modifications can be made to the exemplary embodiments of the present disclosure without materially departing from the spirit and scope of the present disclosure. Accordingly, all such changes and modifications are included within the protection scope of the present disclosure as defined in the claims. The present disclosure is defined by the appended claims, with equivalents of the claims also included therein.

## Claims

1. A seatback servo system for a vehicle seat comprising a cushion frame and a back frame which is pivotable forward and backward with respect to the cushion frame, **characterized in that** the seatback servo system comprises:
a first plate provided on the cushion frame, the first plate being provided with a guide member extending outward;
a second plate provided on the back frame, the second plate being pivotally connected to the first plate at a pivot, and being provided with an arc-shaped guide groove with the pivot as the center and with a radius of L, and the arc-shaped guide groove comprising a starting end and a terminating end that are opposite to each other; and
an unlocking mechanism configured to unlock the first plate and the second plate from a non-pivotable locked state to a pivotable state, and comprising a housing mounted to the first plate, and an unlocking lever movable with respect to the housing;
wherein in a state of normal use of the vehicle, the guide member and the unlocking lever are respectively located at the starting end and the terminating end of the arc-shaped guide groove, so that the first plate and the second plate are in the non-pivotable locked state;
wherein when an unlocking condition is satisfied, the unlocking lever is withdrawn from the terminating end of the arc-shaped guide groove, so that the first plate and the second plate transition from the non-pivotable locked state to the pivotable state, and the arc-shaped guide groove can travel along the guide member from the starting end toward the terminating end, such that the seatback is automatically rotated forward.

2. The seatback servo system according to claim 1, **characterized in that** the arc-shaped guide groove has a free segment, and the free segment has a dimension greater than or equal to a corresponding dimension of the guide member.

3. The seatback servo system according to claim 2, **characterized in that** the free segment is provided with a bush made of a material with a low friction coefficient to reduce or control the frictional resistance upon the passage of the guide member through the free segment.

4. The seatback servo system according to claim 2, **characterized in that** the arc-shaped guide groove also has an energy absorbing segment, and the energy absorbing segment has a dimension smaller than a corresponding dimension of the guide member, wherein the free segment is disposed adjacent to the starting end and the energy absorbing segment is disposed adjacent to the terminating end.

5. The seatback servo system according to claim 2, **characterized in that** in a direction in which the second plate pivots relative to the first plate, the second plate is provided with a fractured energy absorbing structure upstream of the arc-shaped guide groove.

6. The seatback servo system according to claim 5, **characterized in that** the fractured energy absorbing structure comprises a plurality of weakened slots spaced apart from the arc-shaped guide groove.

7. The seatback servo system according to claim 1, **characterized in that** the first plate is provided with a first pivot hole at the pivot, the second plate is provided with a second pivot hole at the pivot, and a pivot fastener passes through the first pivot hole and the second pivot hole to connect the second plate pivotally to the first plate.

8. The seatback servo system according to claim 7, **characterized in that** the first plate is further provided with a receiving hole to receive the guide member and a fixing hole to fix the unlocking mechanism, the receiving hole and the fixing hole correspond in position to the starting end and the terminating end of the arc-shaped guide groove and are spaced apart from the first pivot hole by a distance L.

9. The seatback servo system according to claim 8, **characterized in that** the first pivot hole is disposed in front of and above the receiving hole and the fixing hole, and the second pivot hole is disposed in front of and above the arc-shaped guide grove.

10. The seatback servo system according to claim 1, **characterized in that** an electronic control unit is configured to detect a collision acceleration and an angle of the seatback of the vehicle, and issue an unlocking instruction to the unlocking mechanism in a case where the collision acceleration and the angle of the seatback satisfy the set threshold values to withdraw the unlocking lever from the terminating end of the arc-shaped guide groove.

11. The seatback servo system according to any one of claims 1 to 10, **characterized in that** the first plate comprises a cushion wall plate located on the left or right side of the cushion frame.

12. The seatback servo system according to any one of claims 1 to 10, **characterized in that** the second plate comprises a recliner lower connecting plate of a recliner located on the left or right side of a lower end of the back frame.

13. The seatback servo system according to claim 12, **characterized in that** the recliner comprises a first portion and a second portion that are rotatable relative to each other, the first portion is fixed to a main body of the back frame and the second portion is fixed to the recliner lower connecting plate which in turn is operatively connected to the first plate by the seatback servo system.

14. The seatback servo system according to any one of claims 1 to 10, **characterized in that** the unlocking mechanism is a gunpowder-triggered unlocking mechanism or an electromagnetically triggered unlocking mechanism.

15. The seatback servo system according to any one of claims 1 to 10, **characterized in that** the unlocking mechanism further comprises a piston and a driving assembly, the piston is fixed in an internal chamber of the housing by a temporary fixing means, and the driving assembly pushes the piston to rapidly displace in the internal chamber after overcoming the resistance of the temporary fixing means.

16. The seatback servo system according to claim 15, **characterized in that** the temporary fixing means is selected from the group consisting of an interference fit, bonding, and a fragile connector.

17. The seatback servo system according to claim 15, **characterized in that** the internal chamber communicates with the outside through an opening, and the unlocking lever is connected with the piston through the opening from the outside of the housing or integrally formed with the piston, so that the piston can drive the unlocking lever to move with respect to the housing.

18. The seatback servo system according to claim 17, **characterized in that** the unlocking lever is provided in a substantially T shape, a bottom end of the T shape is connected to the piston and a top end of the T shape is inserted into the arc-shaped guide groove of the recliner lower connecting plate and located at the terminating end of the arc-shaped guide groove.

19. The seatback servo system according to claim 17, **characterized in that** the driving assembly comprises an ignition tube, and the ignition tube ignites gunpowder after electric current passes and generates a high-pressure gas, to push the piston to rapidly displace in the internal chamber.

20. The seatback servo system according to claim 19, **characterized in that** the piston is provided with one or more O-rings, the opening of the internal chamber is provided with a sealing block, and the ignition tube is fixed to the housing and is in fluid communication with an enclosed space enclosed by the piston, the O-rings, the housing, the sealing block and the unlocking lever.

21. The seatback servo system according to claim 20, **characterized in that** the annular area of the piston is greater than that of the sealing block, so that the high-pressure gas generated by the ignition tube can push the piston to rapidly displace in one direction.

22. The seatback servo system according to claim 19, **characterized in that** a short circuit ring is provided at a pin of the ignition tube to prevent false triggering of the ignition tube.

23. A vehicle seat comprising the seatback servo system according to any one of claims 1 to 22, which is mounted on a cushion frame and/or a back frame.
